(19) Europäisches Patentamt / European Patent Office / Office européen des brevets

(11) **EP 4 001 057 B1**

(12) **EUROPEAN PATENT SPECIFICATION**

(45) Date of publication and mention
of the grant of the patent:
**06.09.2023 Bulletin 2023/36**

(21) Application number: **21208790.2**

(22) Date of filing: **17.11.2021**

(51) International Patent Classification (IPC):
**B62D 7/04** *(2006.01)* **B62D 7/15** *(2006.01)*
**B62D 11/04** *(2006.01)*

(52) Cooperative Patent Classification (CPC):
B62D 11/04; **B62D 7/1509;** B62D 7/04; B62D 11/20

(54) **CONTROL METHOD FOR VEHICLE, AUTOMATIC GUIDED VEHICLE, AND COMPUTER-READABLE STORAGE MEDIUM**

STEUERUNGSVERFAHREN FÜR EIN FAHRZEUG, AUTOMATISCH GEFÜHRTES FAHRZEUG UND COMPUTERLESBARES SPEICHERMEDIUM

PROCÉDÉ DE COMMANDE POUR VÉHICULE, VÉHICULE À GUIDAGE AUTOMATIQUE ET SUPPORT D'INFORMATIONS LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2020 CN 202011297461**

(43) Date of publication of application:
**25.05.2022 Bulletin 2022/21**

(73) Proprietor: **Shanghai Quicktron Intelligent Technology Co., Ltd**
**Shanghai 200435 (CN)**

(72) Inventors:
• **GUO, Xinpeng**
**Shanghai, 200435 (CN)**
• **WANG, Jinyuan**
**Shanghai, 200435 (CN)**
• **NI, Fei**
**Shanghai, 200435 (CN)**

(74) Representative: **SONN Patentanwälte OG**
**Riemergasse 14**
**1010 Wien (AT)**

(56) References cited:
**EP-A1- 3 689 709**

**Description**

TECHNICAL FIELD

The present disclosure generally relates to the technical field of control, especially to a control method for a vehicle, an automatic guided vehicle (AGV) and a computer-readable storage medium.

BACKGROUND ART

The four-wheel-set differential motors in a forklift are relatively small but arranged in great spacing. Furthermore, since the chassis structure is rigid, even if a suspension mechanism is provided, it is still difficult to avoid skidding, or even dangling of the wheel set or other problems, caused by the unbalanced friction between the wheel sets in a place where the ground is not quite flat or even. How to control a vehicle when one of the wheel sets skids or dangles is an urgent technical problem to be solved.

The contents in the Background Art are merely the technologies known by the disclosers, and do not necessarily represent the prior art in the field. Furthermore, the features of the preamble of the independent claim are disclosed in document EP 3 689 709 A1.

SUMMARY OF THE INVENTION

In light of at least one problem in the prior art, the present invention provides a control method for a vehicle, wherein the vehicle comprises a plurality of differential wheel sets, the control method comprising:

> S101: determining whether a chassis state machine of the vehicle switches from a first state to a second state;
> S102: adjusting angles of the plurality of differential wheel sets to angles corresponding to the second state when the chassis state machine switches;
> S103: determining whether each differential wheel set is adjusted in place upon a preset time;
> S104: controlling the vehicle to travel at a first preset velocity when each differential wheel set is adjusted in place; and
> S105: controlling the vehicle to travel at a second preset velocity, and also continuously adjusting one of the differential wheel sets when the one of the differential wheel sets is not adjusted in place, wherein the second preset velocity is lower than the first preset velocity.

In accordance with one aspect of the present invention, the step S105 further comprises: controlling the vehicle to travel at the first preset velocity when the one of the differential wheel sets is adjusted in place.

In accordance with one aspect of the present invention, the chassis state machine can switch among straight, rotation and sidesway.

In accordance with one aspect of the present invention, the step S103 comprises:

> determining whether each differential wheel set is adjusted in place by determining whether each differential wheel set skids or floats; or
>
> determining whether each differential wheel set is adjusted in place by determining whether a difference between a current angle of each differential wheel set and the angle corresponding to the second state is greater than a first threshold.

In accordance with one aspect of the present invention, the control method further comprises:
setting a skid mark of the vehicle to 0 when each differential wheel set is adjusted in place; and setting the skid mark of the vehicle to 1 when one of the differential wheel sets is not adjusted in place.

In accordance with one aspect of the present invention, the control method further comprises:

> S106: determining whether a difference between the current angle of each differential wheel set and an angle corresponding to a current state of the chassis state machine is greater than a second threshold when the chassis state machine of the vehicle does not switch; and
>
> S107: controlling the vehicle to travel at the second preset velocity when the difference is greater than the second threshold, and also continuously adjusting an angle of a differential wheel set satisfying that the difference is greater than the second threshold until the difference is less than the second threshold, and controlling the vehicle to travel at a normal velocity higher than the second preset velocity.

In accordance with one aspect of the present invention, the vehicle has four pairs of differential wheel sets, the vehicle is an automatic guided vehicle, and the second preset velocity is less than or equal to 5cm/s.

In accordance with one aspect of the present invention, the control method further comprises:

determining a lateral deviation $y_{err}$ and an angular deviation $\phi_{err}$ of the vehicle; and

determining a lateral velocity $V_{y_{err}}$ and an angular velocity $w_{\phi_{err}}$ for deviation correction according to the following formula:

$$V_{y_{err}} = -k_v \cdot P_y \cdot y_{err} - k_v \cdot I_y \cdot \int y_{err}$$

$$w_{\phi_{err}} = -k_v \cdot P_\phi \cdot \phi_{err} - k_v \cdot I_\phi \cdot \int \phi_{err}$$

$$k_v = |V_x|$$

where $P_y$, $I_y$ are a proportional coefficient and an integral coefficient for lateral deviation correction control respectively, $P_\phi$, $I_\phi$ are a proportional coefficient and an integral coefficient for angular deviation correction control respectively, and $V_x$ is a traveling velocity of the vehicle; and $k_v$ is in the range of 0.2-1.0.

In accordance with one aspect of the present invention, the control method further comprises: performing power equalization control inside and between each differential wheel set when the vehicle travels along a straight line.

In accordance with one aspect of the present invention, the power equalization control is performed inside and between each differential wheel set in the following ways:

calculating powers of two motors in each wheel set, calculating a first average power, and adjusting and controlling the two motors through PID control according to an deviation between the power of each motor and the average power, so as to effectuate the power equalization control inside the wheel set; and

calculating powers of each wheel set, calculating a second average power of the wheel set, and adjusting and controlling the plurality of wheel sets through PID according to an deviation between the power of each wheel set and the second average power, so as to effectuate the power equalization control between wheel sets.

The present invention also relates to an automatic guidance vehicle, comprising:

a plurality of pairs of differential wheel sets;

a controller coupled to the plurality of pairs of differential wheel sets and configured to be capable of implementing the control method as described above.

According to one aspect of the present invention, the automatic guided vehicle comprises four pairs of differential wheel sets, each pair of differential wheel sets comprises two wheels, and the automatic guided vehicle comprises a motor corresponding to each wheel.

In accordance with one aspect of the present invention, the automatic guidance vehicle further comprises:

a plurality of angle sensors, each of which corresponds to one of the pairs of differential wheel sets and detects an angle of the differential wheel sets; The angle sensors in communication with the controller to transmit the angle;

wherein the controller is configured to: control the vehicle to stop and then adjust the differential wheel sets when the chassis state machine switches from the first state to the second state.

In accordance with one aspect of the present invention, the automatic guided vehicle further comprises a plurality of skid sensors, each of which corresponds to one of the pairs of differential wheel sets to detect whether the differential wheel sets skid, the skid sensors in communication with the controller.

The present invention also relates to a computer-readable storage medium, comprising computer executable instructions stored thereon, which implement the control method as described above when executed by a processor.

With the technical solutions in the examples of the present invention, a vehicle can still be controlled effectively in the case of skidding or floating when the states are being switched in the vehicle, and the deviation between the vehicle motion parameters and the ideal motion parameters can be continuously corrected and reduced at the same time.

BRIEF DESCRIPTION OF THE DRAWINGS

The drawings that constitute part of the present disclosure are provided for the purpose of further understanding the same, and the exemplary examples and description thereof are listed to explain the present disclosure, but do not make any inappropriate limitation of the same. In the drawings:

FIG. 1 is a schematic diagram illustrating a kinematic model of a chassis of a vehicle;
FIG. 2 shows a control method for a vehicle according to one example of the present invention;
FIG. 3 shows a control method for a vehicle according to one preferred example of the present invention; and
FIG. 4 shows a vehicle deviation correction model according to one example of the present invention.

DETAILED DESCRIPTION OF THE EMBODIMENTS OF THE INVENTION

Certain exemplary examples will be described below only in a brief manner. Just as those skilled in the art will recognize, changes in various ways to the examples described herein can be carried out without departing from the scope of the present invention, which is defined by the appended claims. Therefore, the drawings and the following description are deemed essentially exemplary, instead of limitative.

In the description of the present invention, it needs to be understood that the orientation or position relations denoted by such terms as "central", "longitudinal", "latitudinal", "length", "width", "thickness", "above", "below", "front", "rear", "left", "right", "vertical", "horizontal", "top", "bottom", "inside", "outside", "clockwise", "counterclockwise" and the like are based on the orientation or position as shown in the accompanying drawings, and are used only for the purpose of facilitating description of the present invention and simplification of the description, instead of indicating or suggesting that the denoted devices or elements must be oriented specifically, or configured or operated in some specific orientation. Thus, such terms should not be construed to limit the present invention. In addition, such terms as "first" and "second" are only used for the purpose of description, rather than indicating or suggesting relative importance or implicitly indicating the number of the designated technical features. Accordingly, features defined with "first" or "second" may, expressly or implicitly, include one or more of such features. In the description of the present invention, "plurality" means two or above, unless otherwise defined explicitly and specifically.

In the description of the present invention, it needs to be noted that, unless otherwise specified and defined explicitly, such terms as "mount", "link" and "connect" should be understood as generic terms. For example, connection may refer to fixed connection, dismountable connection, or integrated connection; also to mechanical connection, electrical connection or intercommunication; further to direct connection, or connection by an intermediary medium; or even to internal communication between two elements or interaction between two elements. For those skilled in the art, they can construe the specific meaning of such terms herein in light of the specific circumstances.

Herein, unless otherwise specified and defined explicitly, if a first feature is "above" or "below" a second one, this may cover the direct contact between the first and second features, also cover the contact via another feature therebetween, instead of the direct contact. Furthermore, if a first feature is "above", "over" or "on the top of" a second one, this may cover the case that the first feature is right above or on the inclined top of the second feature, or just indicate that the first feature has a horizontal height higher than that of the second feature. If a first feature is "below", "under" or "on the bottom of" a second feature, this may cover the case that the first feature is right below and on the inclined bottom of the second feature, or just indicates that the first feature has a horizontal height lower than that of the second feature.

The disclosure below provides many different embodiments and instances so as to achieve different structures described herein. In order to simplify the disclosure herein, the following will give the description of the parts and arrangements embodied in specific instances. Surely, they are just for the exemplary purpose, not intended to limit the present invention. Besides, the present invention may repeat a reference number and/or reference letter in different instances, and such repeat is for the purpose of simplification and clarity, which does not represent any relation among various embodiments and/or arrangements as discussed. In addition, the present invention provides instances of various specific techniques and materials, but those skilled in the art can also be aware of application of other techniques and/or use of other materials.

The preferred examples of the present invention will be introduced below along with the drawings. It should be appreciated that the preferred examples described herein are only for the purpose of illustrating and explaining, instead of restricting, the present invention.

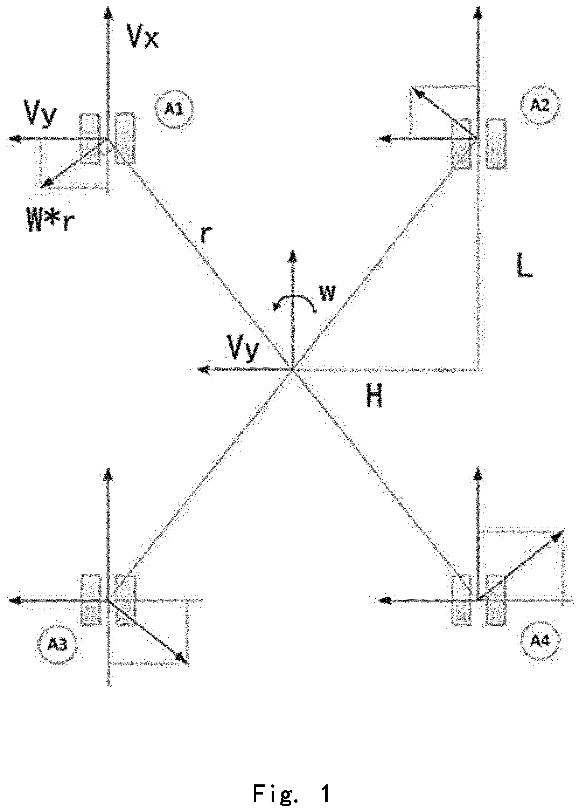

FIG. 1 is a schematic diagram illustrating a kinetic model of a chassis of a vehicle, which comprises four pairs of differential wheel sets A1, A2, A3 and A4, each pair of differential wheel sets comprising two wheels. Preferably, each wheel is driven by a separate motor. Therefore, the velocity and angular velocity of the whole vehicle can be decomposed into the control velocity of each motor. By taking a direction right ahead of a vehicle as the positive direction of the x-coordinate, it can be known under the right-hand rule that the left side is the positive direction of the y-coordinate, the velocity of the whole vehicle is $V_x$ and $V_y$, and the angular velocity is $\omega$. As shown in FIG. 1, the velocity and the angular velocity of the whole vehicle can be decomposed into the velocity $Vi_x$ and $Vi_y$ of each wheel set. The vehicle may be any vehicle including a forklift, an automatic guided vehicle (AGV), etc.

In the schematic diagram of FIG. 1, the chassis of the vehicle comprises four pairs of differential wheel sets. The present invention is not limited to this, and the number of differential wheel sets included therein may also be more or less. These are all within the protection scope of the present invention.

The vehicle may comprise a chassis state machine for indicating a motion state of the vehicle. The motion states of the vehicle can include four modes: STRAIGHT, ROTATION, SIDESWAY and CURVE. Among them, STRAIGHT means that the vehicle travels along a direction as pointed by its head; ROTATION means that the vehicle rotates around a motion center in situ, for example rotating in situ to change the traveling direction of the head; SIDESWAY means that the vehicle does not change the direction as pointed by its head, but changes the direction of its wheels by, for example, 90 degrees, so that it can travel in a direction different from the direction as pointed by its head; and CURVE means that the vehicle travels along a preset curved trajectory. Certainly, the chassis state machine may also include other motion modes.

The chassis state machine of the vehicle can be achieved by software, hardware or a combination of software and hardware, in which parameters indicating the motion states of the vehicle are stored. According to one example of the present invention, the chassis state machine is a description of the current state of the four wheel sets, for example a software indication. When a movement instruction is received from an upper level, switching takes place in the chassis state machine. For example, the chassis state machine changes when an upper computer or controller sends a STRAIGHT instruction, and then sends a ROTATION instruction.

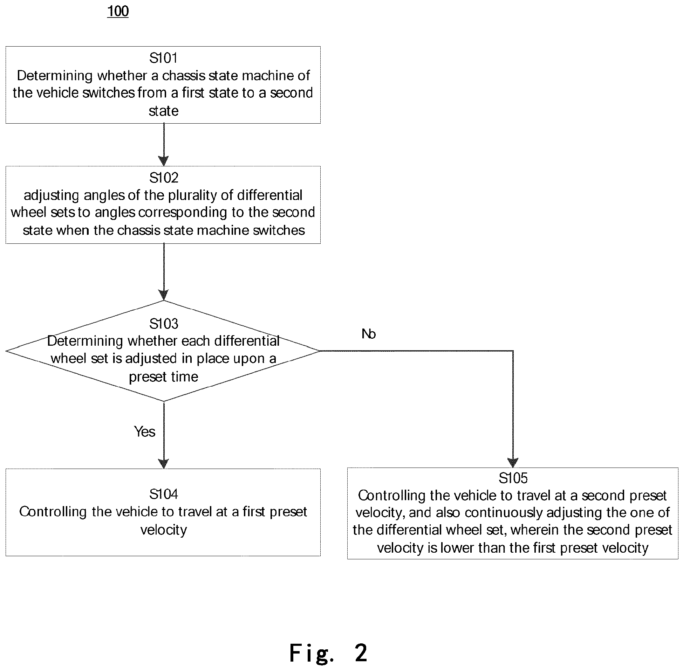

FIG. 2 shows a control method 100 for a vehicle according to one example of the present invention, in which the vehicle comprises a plurality of differential wheel sets, like the vehicle as shown in FIG. 1. The control method 100 will be described below in detail with reference to the drawings.

In step S101: determining whether a chassis state machine of the vehicle switches from a first state to a second state.

The switching of the chassis state machine means that the motion mode of the vehicle changes among ROTATION/ STRAIGHT/ SIDESWAY/ CURVE. By accessing the chassis state machine of the vehicle at a certain time interval, it can be determined whether the vehicle motion mode will change. Alternatively, a certain triggering mechanism may be arranged. For example, when the chassis state machine of the vehicle changes, a specific notification event will be triggered so as to find out the change of the chassis state machine of the vehicle.

In step S102: adjusting angles of the plurality of differential wheel sets to angles corresponding to the second state when the chassis state machine switches.

When change takes place among the states of ROTATION/ STRAIGHT/ SIDESWAY/ CURVE, the angles of the plurality of wheel sets first need to be adjusted to an appropriate angle (i.e., an angle corresponding to the second state), and then the whole vehicle can start to move. For example, when it switches from STRAIGHT to SIDESWAY, the angles of the four wheel sets first need to be turned to 90° (i.e., the horizontal direction in FIG. 1). In addition, when it switches from other states to STRAIGHT or CURVE, all the four wheel sets need to be turned to a direction parallel to the head of the vehicle, that is, the orientation of the wheel sets is the same as that of the head of the vehicle; when it switches to ROTATION, the wheel sets need to be rotated to be perpendicular to a line between the wheel sets and the rotation center; and when it switches to SIDESWAY, the wheel sets are switched to a direction perpendicular to the head of the vehicle, that is, the orientation of the wheel sets is perpendicular to that of the head of the vehicle.

In step S103: determining whether each differential wheel set is adjusted in place upon a preset time.

After a preset amount of time, each differential wheel set, theoretically, should have been adjusted in place, namely to the angle corresponding to the second state. However, in an actual venue, skid may occur, or one or more of the wheel sets thereof may be dangling (floating). For example, when the ground is icy and slippery, or the ground is rugged and uneven, then a wheel set may skid or float, resulting in the consequence that its angle is not adjusted in place all the way. At this time, one or more of the differential wheel sets therein may skid, or float above the ground.

Each wheel set (or each wheel) of the vehicle can be equipped with an independent angle sensor or angle encoder capable of measuring an angle of the wheel set or wheel in real time. By comparing the measured angle with the angle corresponding to the second state, it can be determined whether each differential wheel set is adjusted in place. In addition, it is easy for those skilled in the art to understand that a certain deviation margin can be allowed at the time of determining whether a differential wheel set is adjusted in place. For example, supposed that an actual angle of the wheel set is $\phi'_i$, the angle corresponding to the second state is $\phi_i$, and an allowable deviation margin (a first threshold) is $\Delta\phi$, when $$|\phi'_i - \phi_i| <= \Delta\phi$$ is met, it can be considered that the differential wheel set is adjusted in place.

The preset time can be set according to the actual situations, which usually can be set to about a few seconds. If each differential wheel set is adjusted in place, proceed to step S104, otherwise proceed to step S105.

In step S104: controlling the vehicle to travel at a first preset velocity when each differential wheel set is adjusted in place.

If each wheel set has been adjusted in place, it is indicated that no skid or floating takes place, then the vehicle can be controlled to proceed at a velocity as predetermined (the first preset velocity) without any intervention.

In step S105: when one of the differential wheel sets is not adjusted in place, controlling the vehicle to travel at a second preset velocity, and also continuously adjusting the one of the differential wheel sets, wherein the second preset velocity is lower than the first preset velocity.

If it is determined in step S103 that at least one of the differential wheel sets thereof is not adjusted in place, then the vehicle is allowed to crawl along a target path at a slower velocity $V_{min}$, and simultaneously adjust the skidding wheel set while travelling. For example, when it switches from STRAIGHT to SIDESWAY, and three differential wheel sets are adjusted in place while one is not, then the three differential wheel sets are controlled to travel at the second preset velocity lower than the first preset velocity, crawling slowly, and simultaneously the remaining one differential wheel set is continuously adjusted.

According to one preferred example of the present invention, the step S105 further comprises: controlling the vehicle to travel at the first preset velocity when the one of the differential wheel sets is adjusted in place, that is, restoring the vehicle to travel at the preset first as predetermined.

According to one preferred example of the present invention, in step S103, it can be determined whether the differential wheel set is adjusted in place in multiple ways. For example, it is determined whether each differential wheel set is adjusted in place by determining whether a difference between a current angle of each differential wheel set and the angle corresponding to the second state is greater than the first threshold as described above. Alternatively, it is determined whether each differential wheel set is adjusted in place by determining whether each differential wheel set skids or floats. For example, in the case of determination by the rotational velocity of each differential wheel set, when the rotational velocity is too high, this indicates that a skid takes place; or in the case of determination by the height or elastic force of a spring in each differential wheel set, when the spring height is too great, this indicates that the differential wheel set floats.

According to one preferred example of the present invention, the controller in the vehicle may include a skid mark corresponding to whether a skid occurs in the vehicle (or each wheel set, or each wheel). For example, when each differential wheel set is adjusted in place, the skid mark of the vehicle is set to 0; and when one of the differential wheel sets is not adjusted in place, the skid mark of the vehicle is set to 1.

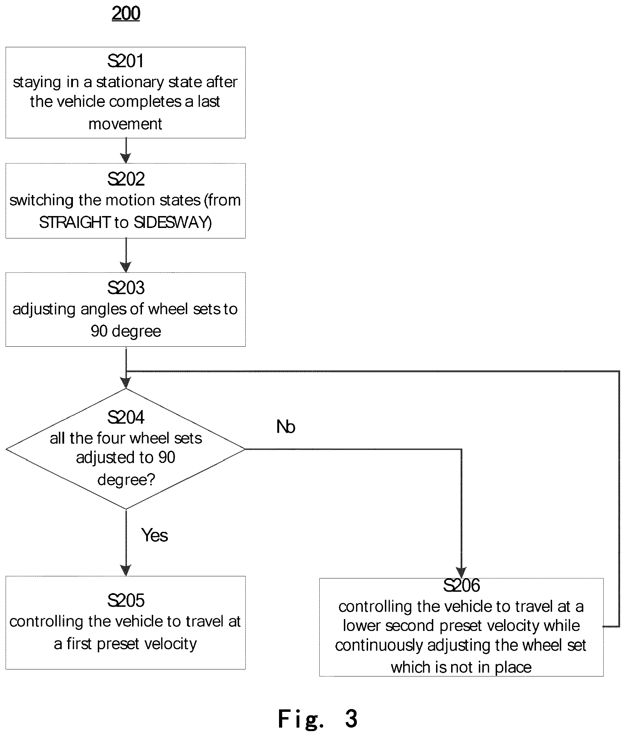

FIG. 3 shows a control method 200 according to one preferred example of the present invention.

In step S201, the vehicle stays in a stationary state after completing a last (or last-section) movement.

In step S202, detecting that the vehicle motion state will be switched, for example, from STRAIGHT to SIDESWAY.

In step S203, adjusting angles of four wheel sets to 90 degrees corresponding to the state of SIDESWAY.

In step S204, determining whether the four wheel sets are adjusted in place. If all of them are adjusted in place, proceed to step S205, otherwise to step S206.

In step S205, controlling the vehicle to travel at a normal first preset velocity.

In step S206, controlling the vehicle to travel at a lower second preset velocity while continuously adjusting a wheel set which has not been adjusted in place, until successful adjustment, and then controlling the vehicle to travel at the normal first preset velocity. The second preset velocity is preferably less than or equal to 5cm/s

In addition, it is easy for those skilled in the art to understand that the first preset velocity is not necessarily a fixed velocity, but may also be a velocity varying with a certain curve.

The above describes how to control a vehicle when state switching is performed in the vehicle. When the chassis state machine of the vehicle does not switch, there may also be a certain deviation between the current angle of each differential wheel set and the angle corresponding to the current state of the chassis state machine. For example, when the vehicle skids while running, the vehicle's running states include STRAIGHT, CURVE and IN-SITU ROTATION/SIDESWAY. When the vehicle is running, the angle of the wheel set and the target angle are generally not completely consistent. If a serious skid takes place, it will cause the problem about a too large difference between the actual angle and the target angle, resulting in the deviation from path during the vehicle's running and even the overcurrent fault of the motor. Therefore, according to one preferred example of the present invention, the control method further comprises:

determining whether a difference between the current angle of each differential wheel set and an angle corresponding to a current state of the chassis state machine is greater than a second threshold when the chassis state machine of the vehicle does not switch; and

controlling the vehicle to travel at the second preset velocity when the difference is greater than the second threshold, and also continuously adjusting an angle of the differential wheel set with the difference greater than the second threshold until the difference is less than the second threshold, and controlling the vehicle to travel at a normal velocity higher than the second preset velocity.

For example, when the chassis state machine of the vehicle is in SIDESWAY, the ideal angle of each differential wheel set should be 90 degree. However, if there is a significant deviation (greater than the second threshold) between the actual angle and 90 degree, it can travel at a lower second preset velocity at this time, and continue adjusting until the difference is less than the second threshold, and then restore to travel at the normal velocity. Optionally, when the difference is greater than the second threshold, the skid mark of the vehicle can be set to 1, and then reset to 0 after the completion of adjustment.

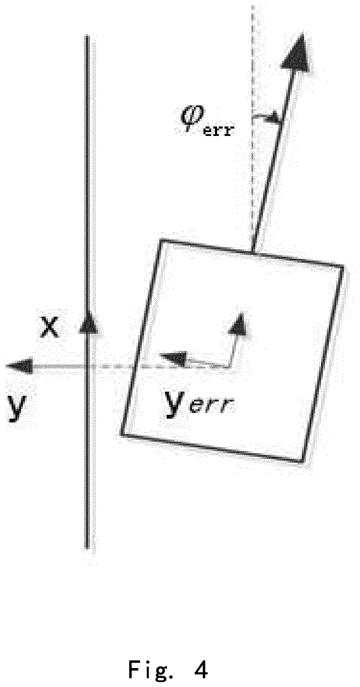

In addition, there may also be some deviation between the motion parameters of the vehicle and the ideal motion parameters, such as horizontal and vertical coordinates and angle, when the vehicle travels. Based on the motion model in FIG. 1, the deviation in the vehicle can be divided into lateral velocity and angular velocity for feedback control. As shown in FIG. 4, when the vehicle proceeds along a straight line, a lateral deviation of the vehicle is $y_{err}$ and an angular deviation is $\phi_{err}$. When the vehicle is in the positive direction of the y-coordinate of the path coordinate system, $y_{err}$ is positive, otherwise negative, and $\phi_{err} = \phi_v - \phi_p$, where $\phi_v$ is an actual lateral coordinate of the vehicle and $\phi_p$ is an ideal lateral coordinate of the vehicle.

After the lateral deviation $y_{err}$ and angular deviation $\phi_{err}$ of the vehicle are determined respectively, the lateral velocity $V_{y_{err}}$ and angular velocity $w_{\phi_{err}}$ for deviation correction are determined by the following formula:

$$V_{y_{\text{err}}} = -k_v \cdot P_y \cdot y_{err} - k_v \cdot I_y \cdot \int y_{err}$$

$$w_{\phi_{\text{err}}} = -k_v \cdot P_\phi \cdot \phi_{err} - k_v \cdot I_\phi \cdot \int \phi_{err}$$

$$k_v = |V_x|$$

Among them, $P_y$, $I_y$ are a proportional coefficient and an integral coefficient for lateral deviation correction control, $P_\phi$, $I_\phi$ are a proportional coefficient and an integral coefficient for angular deviation correction control, and $V_x$ is a traveling velocity of the vehicle; and $k_v$ is in the range of 0.2-1.0. $k_v$ is set with the upper and lower limits of (0.2, 1.0), so that the deviation correction effect can still be guaranteed when the velocity is too low, and the deviation correction will not be performed too much when the velocity is too high. The values of the upper and lower limits are generally taken as empirical values according to the actual repeated experiments.

In addition, for a vehicle comprising a plurality of differential wheel sets, power imbalance is likely to appear, thereby causing the problem about overcurrent or overload in an individual motor. Therefore, according to one preferred example of the present invention, power equalization control is introduced intra- and inter-wheel-set, and thereby velocities of different motors are fine-tuned through the PID control scheme. For example, when the vehicle travels along a straight line, power equalization control is performed inside and between each differential wheel set. The power equalization control can be carried out inside and between each differential wheel set in the following ways:

calculating powers of two motors in each wheel set, calculating a first average power, and adjusting and controlling the two motors through PID control according to a deviation between the power of each motor and the average power, so as to effectuate the power equalization control inside the wheel set; and

calculating powers of each wheel set, calculating a second average power of the wheel set, and adjusting and controlling the plurality of wheel sets through PID according to a deviation between the power of each wheel set and the second average power, so as to effectuate the power equalization control between the wheel sets.

Description is made by taking the power equalization control inside each differential wheel set as an instance. The power of a motor is calculated according to the following formula:

$$p_i = n_i \cdot A_i$$

Supposed that n is a rotational velocity of the motor, A is a current, and the powers of the left and right motors inside the wheel set are $p_1$ and $p_2$, respectively, then the average power is $\bar{p} = (p_1 + p_2)/2$, and a deviation of the motor power relative to the average power is used as an input for feedback control, i.e., $p_{err}$, and $p_{err} = p_i - p_{err}$, and by introducing the PID deviation correction formula, after the power equalization, an output velocity of the motor is:

$$v = v + v_{\text{err}} = v + P \cdot p_{err} - I \cdot \int p_{err}$$

where v is a feedforward velocity of the motor, P is a proportional coefficient and I is an integral coefficient. The power equalization control should not have too much impact on the motor velocity so as to avoid affecting the movement of the whole vehicle. Therefore, the value of P usually does not exceed 0.02, and that of I not exceed 0.01.

Equalization between the wheel sets is made under the same principle as equalization inside the wheel set, except that the average power therein is an average power of all wheel sets. Taking a model with four wheel sets as an instance, the powers of the four wheel sets are $p_1$, $p_2$, $p_3$, and $p_4$, respectively and then the average power is $\bar{p} = (p_1 + p_2 + p_3 + p_4)/4$, which will not be repeated here.

The present invention also relates to an automatic guide vehicle, whose chassis motion model is as shown in FIG. 1. The automatic guide vehicle comprises a plurality of pairs of differential wheel sets, motors and a controller. Preferably, each pair of differential wheel sets comprises two wheels, and each wheel has a separate motor. The controller is coupled with the plurality of pairs of differential wheel sets (or motors thereof) and is configured to be capable of implementing the control method as described above for performing different control methods according to the situations including whether one wheel set thereof skids or floats, when the chassis state machine of the automatic guided vehicle switches.

According to one preferred example of the present invention, the automatic guided vehicle comprises four pairs of differential wheel sets, each pair of differential wheel sets comprising two wheels, and the automatic guided vehicle comprises a motor corresponding to each wheel.

According to one preferred example of the present invention, the automatic guided vehicle further comprises: a plurality of angle sensors, each of which corresponds to one of the pairs of differential wheel sets and detects an angle of the differential wheel sets. The angle sensors are in communication with the controller to transmit the angle. The controller is configured to control the vehicle to stop and then adjust the differential wheel sets when the chassis state machine switches from the first state to the second state.

According to one preferred example of the present invention, the automatic guided vehicle further comprises a plurality of sensors for detecting a skid, each of which corresponds to one of the pairs of differential wheel sets to detect whether the differential wheel sets skid, the sensors for detecting a skid are in communication with the controller. Thus, the controller can implement different control methods according to the detection results of the sensors.

The present invention also relates to a computer-readable storage medium, comprising computer executable instructions stored thereon, which implement the control method as described above when executed by a processor.

With the technical solutions in the examples of the present invention, a vehicle can still be controlled effectively in the case of skidding or floating when the states are being switched in the vehicle, and the deviation between the vehicle motion parameters and the ideal motion parameters can be continuously corrected and reduced at the same time.

**Claims**

1. A control method for a vehicle, wherein the vehicle comprises a plurality of differential wheel sets, the control method comprising:

   S101: determining whether a chassis state machine of the vehicle switches from a first state to a second state;
   S102: adjusting angles of the plurality of differential wheel sets to angles corresponding to the second state when the chassis state machine switches;
   S103: determining whether each differential wheel set is adjusted in place upon a preset time;
   S104: controlling the vehicle to travel at a first preset velocity when each differential wheel set is adjusted in place, **characterized in that** the control method further comprising:
   S105: when one of the differential wheel sets is not adjusted in place, controlling the vehicle to travel at a second preset velocity, and also continuously adjusting the one of the differential wheel sets, wherein the second preset velocity is lower than the first preset velocity.

2. The control method according to claim 1, **characterized in that** the step S105 further comprises:
controlling the vehicle to travel at the first preset velocity when the one of the differential wheel sets is adjusted in place.

3. The control method according to claim 1, **characterized in that** the chassis state machine can switch among straight, rotation and sidesway.

4. The control method according to any of claims 1-3, **characterized in that** the step S103 comprises:

   determining whether each differential wheel set is adjusted in place by determining whether each differential wheel set skids or floats; or
   determining whether each differential wheel set is adjusted in place by determining whether a difference between a current angle of each differential wheel set and the angle corresponding to the second state is greater than a first threshold.

5. The control method according to any of claims 1-3, **characterized in** further comprising:

   setting a skid mark of the vehicle to 0 when each differential wheel set is adjusted in place; and
   setting the skid mark of the vehicle to 1 when one of the differential wheel sets is not adjusted in place.

6. The control method according to any of claims 1-3, **characterized in** further comprising:

   S106: determining whether a difference between the current angle of each differential wheel set and an angle corresponding to a current state of the chassis state machine is greater than a second threshold when the chassis state machine of the vehicle does not switch; and
   S107: controlling the vehicle to travel at the second preset velocity when the difference is greater than the second threshold, and also continuously adjusting an angle of a differential wheel set with the difference greater than the second threshold, until the difference is less than the second threshold, and controlling the vehicle to travel at a normal velocity higher than the second preset velocity.

7. The control method according to any of claims 1-3, **characterized in that** the vehicle has four pairs of differential wheel sets, the vehicle is an automatic guided vehicle, and the second preset velocity is less than or equal to 5cm/s.

8. The control method according to any of claims 1-3, **characterized in** further comprising:

   determining a lateral deviation yerr and an angular deviation $\phi$err of the vehicle; and
   determining a lateral velocity Vyerr and an angular velocity w$\phi$err for deviation correction according to the following formula:

$$Vyerr=-kv\cdot Py\cdot yerr-kv\cdot Iy\cdot yerr$$

$$w\phi err=-kv\cdot P\phi\cdot\phi err-kv\cdot I\phi\cdot\phi err$$

$$kv=|Vx|$$

   where Py,Iy are a proportional coefficient and an integral coefficient for lateral deviation correction control respectively, P$\phi$,I$\phi$ are a proportional coefficient and an integral coefficient for angular deviation correction control respectively, and Vx is a traveling velocity of the vehicle; and kv is in the range of 0.2-1.0.

9. The control method according to any of claims 1-3, **characterized in** further comprising: performing power equalization control inside and between each differential wheel set when the vehicle travels along a straight line.

10. The control method according to claim 9, **characterized in that** the power equalization control is performed inside and between each differential wheel set in the following ways:

    calculating powers of two motors in each wheel set, calculating a first average power, and adjusting and controlling the two motors through PID control according to an deviation between the power of each motor and the average power, so as to effectuate the power equalization control inside the wheel set; and

calculating powers of each wheel set, calculating a second average power of the wheel sets, and adjusting and controlling the plurality of wheel sets through PID according to an deviation between the power of each wheel set and the second average power, so as to effectuate the power equalization control between the wheel sets.

11. The control method according to any of claims 1-3, **characterized in that** the chassis state machine include a straight state, a rotation state, a sidesway state and a curve state, wherein the angle corresponding to the second state is in a direction parallel to a head of the vehicle when the second state is the straight state or the curve state; the angle corresponding to the second state is perpendicular to a line between the wheel set and the rotation center when the second state is the rotation state; and the angle corresponding to the second state is perpendicular to a direction of the head of the vehicle when the second state is the sidesway state.

12. An automatic guidance vehicle, **characterized in** comprising:

a plurality of pairs of differential wheel sets;
a controller coupled to the plurality of pairs of differential wheel sets and configured to be capable of implementing the control method according to any one of claims 1 to 11.

13. The automatic guided vehicle according to claim 12, **characterized in that** the automatic guided vehicle comprises four pairs of differential wheel sets, each pair of differential wheel sets comprises two wheels, and the automatic guided vehicle comprises a motor corresponding to each wheel.

14. The automatic guidance vehicle according to claims 12 or 13, **characterized in** further comprising:

a plurality of angle sensors, each of which corresponds to one of the pairs of differential wheel sets and detects an angle of the differential wheel sets; the angle sensors are in communication with the controller to transmit the angle;
wherein the controller is configured to: control the vehicle to stop and then adjust the differential wheel sets when the chassis state machine switches from the first state to the second state.

15. The automatic guided vehicle according to claim 12 or 13, **characterized in** further comprising a plurality of sensors for detecting a skid, each of which corresponds to one of the pairs of differential wheel sets to detect whether the differential wheel sets skid, the sensors for detecting a skid are in communication with the controller.

16. A computer-readable storage medium, comprising computer executable instructions stored thereon, **characterized in that** the computer executable instructions implement the control method according to any one of claims 1 to 11 when executed by a processor.

**Patentansprüche**

1. Steuerverfahren für ein Fahrzeug, wobei das Fahrzeug eine Vielzahl von Differenzialradsätzen umfasst, wobei das Steuerverfahren umfasst:

S101: Bestimmen, ob eine Karosseriezustandsmaschine des Fahrzeugs von einem ersten Zustand in einen zweiten Zustand umschaltet;
S 102: Einstellen von Winkeln der Vielzahl von Differenzialradsätzen auf Winkel, die dem zweiten Zustand entsprechen, wenn die Karosseriezustandsmaschine umschaltet;
S103: Bestimmen, ob jeder Differenzialradsatz nach einer voreingestellten Zeit an Ort und Stelle angepasst wird,
S 104: Steuern des Fahrzeugs, sodass es bei einer ersten voreingestellten Geschwindigkeit fährt, wenn jeder Differenzialradsatz an Ort und Stelle angepasst wird, **dadurch gekennzeichnet, dass** das Steuerverfahren ferner umfasst:
S105: wenn einer der Differenzialradsätze nicht an Ort und Stelle angepasst wird, Steuern des Fahrzeugs, sodass es bei einer zweiten voreingestellten Geschwindigkeit fährt, und außerdem kontinuierliches Anpassen des einen der Differenzialradsätze, wobei die zweite voreingestellte Geschwindigkeit niedriger als die erste voreingestellte Geschwindigkeit ist.

2. Steuerverfahren nach Anspruch 1, **dadurch gekennzeichnet, dass** Schritt S105 ferner umfasst: Steuern des Fahrzeugs, sodass es bei der ersten voreingestellten Geschwindigkeit fährt, wenn der eine der Differenzialradsätze an Ort und Stelle angepasst wird.

3. Steuerverfahren nach Anspruch 1, **dadurch gekennzeichnet, dass** die Karosseriezustandsmaschine zwischen geradeaus, Drehung und seitwärts umschalten kann.

4. Steuerverfahren nach einem der Ansprüche 1-3, **dadurch gekennzeichnet, dass** Schritt S103 umfasst: Bestimmen, ob jeder Differenzialradsatz an Ort und Stelle angepasst wird, durch Bestimmen, ob der Differenzialradsatz durchdreht oder abhebt; oder Bestimmen, ob jeder Differenzialradsatz an Ort und Stelle angepasst wird, durch Bestimmen, ob eine Differenz zwischen einem aktuellen Winkel jedes Differenzialradsatzes und dem Winkel, der dem zweiten Zustand entspricht, größer als ein erster Schwellenwert ist.

5. Steuerverfahren nach einem der Ansprüche 1-3, **dadurch gekennzeichnet, dass** es ferner umfasst: Einstellen einer Durchdrehmarkierung des Fahrzeugs auf 0, wenn jeder Differenzialradsatz an Ort und Stelle angepasst wird, und Einstellen der Durchdrehmarkierung des Fahrzeugs auf 1, wenn einer der Differenzialradsätze nicht an Ort und Stelle angepasst wird.

6. Steuerverfahren nach einem der Ansprüche 1-3, **dadurch gekennzeichnet, dass** es ferner umfasst:

   S106: Bestimmen, ob eine Differenz zwischen einem aktuellen Winkel jedes Differenzialradsatzes und einem Winkel, der einem aktuellen Zustand der Karosseriezustandsmaschine entspricht, größer als ein zweiter Schwellenwert ist, wenn die Karosseriezustandsmaschine des Fahrzeugs nicht umschaltet; und
   S107: Steuern des Fahrzeugs, sodass es mit der zweiten voreingestellten Geschwindigkeit fährt, wenn die Differenz größer als der zweite Schwellenwert ist, und außerdem kontinuierliches Anpassen eines Winkels eines Differenzialradsatzes mit der Differenz, die größer als der zweite Schwellenwert ist, bis die Differenz kleiner als der zweite Schwellenwert ist, und Steuern des Fahrzeugs, sodass es mit normaler Geschwindigkeit fährt, die höher als die zweite voreingestellte Geschwindigkeit ist.

7. Steuerverfahren nach einem der Ansprüche 1-3, **dadurch gekennzeichnet, dass** das Fahrzeug vier Paar Differenzialradsätze aufweist, das Fahrzeug ein automatisch gelenktes Fahrzeug ist und die zweite voreingestellte Geschwindigkeit kleiner oder gleich 5 cm/s ist.

8. Steuerverfahren nach einem der Ansprüche 1-3, **dadurch gekennzeichnet, dass** es ferner umfasst: Bestimmen einer lateralen Abweichung yerr und einer Winkelabweichung φerr des Fahrzeugs; und Bestimmen einer lateralen Geschwindigkeit Vyerr und einer Winkelgeschwindigkeit wφerr zur Abweichungskorrektur gemäß der folgenden Formel:

$$V_{yerr}=-kv \cdot Py \cdot yerr-kv \cdot Iy \cdot yerr$$

$$w\varphi err=-kv \cdot P\varphi \cdot \varphi err-kv \cdot I\varphi \cdot \varphi err$$

$$kv=|Vx|$$

wobei Py, Iy jeweils ein Proportionalkoeffizient und ein Integralkoeffizient zur Steuerung für die laterale Abweichungskorrektur sind, $P\varphi$, $I\varphi$ jeweils ein Proportionalkoeffizient und ein Integralkoeffizient zur Steuerung für die Winkelabweichungskorrektur sind und Vx eine Fahrgeschwindigkeit des Fahrzeugs ist, und $k_v$ im Bereich von 0,2-1,0 liegt.

9. Steuerverfahren nach einem der Ansprüche 1-3, **dadurch gekennzeichnet, dass** es ferner umfasst: Durchführen einer Leistungsausgleichssteuerung innerhalb jedes Differenzialradsatzes und unter diesen, wenn das Fahrzeug geradeaus fährt.

10. Steuerverfahren nach Anspruch 9, **dadurch gekennzeichnet, dass** die Leistungsausgleichssteuerung auf folgende Weise innerhalb jedes Differenzialradsatzes und unter diesen durchgeführt wird:

Berechnen der Leistung von zwei Motoren in jedem Radsatz, Berechnen einer ersten Durchschnittsleistung und Anpassen und Steuern der zwei Motoren durch PID-Steuerung gemäß einer Abweichung zwischen der Leistung jedes Motors und der Durchschnittsleistung, um die Leistungsausgleichssteuerung innerhalb des Radsatzes zu bewirken; und

Berechnen der Leistung jedes Radsatzes, Berechnen einer zweiten Durchschnittsleistung der Radsätze und Anpassen und Steuern der Vielzahl von Radsätzen durch PID gemäß einer Abweichung zwischen der Leistung jedes Radsatzes und der zweiten Durchschnittsleistung, um die Leistungsausgleichssteuerung zwischen den Radsätzen zu bewirken.

11. Steuerverfahren nach einem der Ansprüche 1-3, **dadurch gekennzeichnet, dass** die Karosseriezustandsmaschine einen Geradeauszustand, einen Drehzustand, einen Seitwärtszustand und einen Kurvenzustand beinhaltet, wobei der Winkel, der dem zweiten Zustand entspricht, in einer Richtung parallel zu einem Kopf des Fahrzeugs ist, wenn der zweite Zustand der Geradeauszustand oder der Kurvenzustand ist, der Winkel, der dem zweiten Zustand entspricht, senkrecht zu einer Linie zwischen dem Radsatz und dem Drehmittelpunkt ist, wenn der zweite Zustand der Drehzustand ist, und der Winkel, der dem zweiten Zustand entspricht, senkrecht zu einer Richtung des Kopfes des Fahrzeugs ist, wenn der zweite Zustand der Seitwärtszustand ist.

12. Fahrzeug mit automatischer Lenkung, **dadurch gekennzeichnet, dass** es umfasst:

eine Vielzahl von Differenzialradsatzpaaren;
eine Steuereinrichtung, die an die Vielzahl von Differenzialradsatzpaaren gekoppelt ist und so konfiguriert ist, dass sie das Steuerverfahren nach eine der Ansprüche 1 bis 11 umsetzen kann.

13. Fahrzeug mit automatischer Lenkung nach Anspruch 12, **dadurch gekennzeichnet, dass** das Fahrzeug mit automatischer Lenkung vier Differenzialradsatzpaare umfasst, wobei jedes Differenzialradsatzpaar zwei Räder umfasst und das Fahrzeug mit automatischer Lenkung einen Motor in Entsprechung zu jedem Rad umfasst.18

14. Fahrzeug mit automatischer Lenkung nach Anspruch 12 oder 13, **dadurch gekennzeichnet, dass** es ferner umfasst:

eine Vielzahl von Winkelsensoren, von denen jeder einem Differenzialradsatzpaar entspricht und einen Winkel der Differenzialradsätze erfasst; wobei die Winkelsensoren mit der Steuereinrichtung in Kommunikationsverbindung stehen, um den Winkel zu senden;
wobei die Steuereinrichtung konfiguriert ist zum Steuern des Fahrzeugs, sodass es anhält, und dann Anpassen der Differenzialradsätze, wenn die Karosseriezustandsmaschine aus dem ersten Zustand in den zweiten Zustand umschaltet.

15. Fahrzeug mit automatischer Lenkung nach Anspruch 12 oder 13, **dadurch gekennzeichnet, dass** es ferner eine Vielzahl von Sensoren zum Erfassen von Schleudern umfasst, von denen jeder einem der Differenzialradsatzpaare entspricht, um ein Schleudern der Differenzialradsätze zu erfassen, wobei die Schleudererfassungssensoren mit der Steuereinrichtung in Kommunikationsverbindung stehen.

16. Computerlesbares Speichermedium, umfassend darauf gespeicherte computerausführbare Anweisungen, **dadurch gekennzeichnet, dass** die computerausführbaren Anweisungen das Steuerverfahren nach einem der Ansprüche 1 bis 11 ausführen, wenn sie durch einen Prozessor ausgeführt werden.

## Revendications

1. Procédé de commande pour un véhicule, dans lequel le véhicule comprend une pluralité d'essieux différentiels, ledit procédé de commande comprenant :

S101 : déterminer si une machine d'état de châssis du véhicule passe d'un premier état à un deuxième état ;
S102 : réglage des angles de la pluralité des essieux différentiels aux angles correspondant au deuxième état lorsque la machine d'état du châssis change d'état ;
S103 : déterminer si chaque essieu différentiel est réglé en place selon un temps prédéfini ;
S104 : commander le véhicule pour qu'il se déplace à une première vitesse préréglée lorsque chaque essieu différentiel est ajusté en place, **caractérisée en ce que** le procédé de commande comprend en outre :
S105 : lorsque l'un des essieux différentiels n'est pas ajusté en place, contrôler le véhicule pour qu'il se déplace à une deuxième vitesse prédéfinie et ajuster de façon continue l'un des essieux différentiels, dans lequel la deuxième vitesse préréglée est inférieure à la première vitesse préréglée.

2. Procédé de commande selon la revendication 1, **caractérisé en ce que** l'étape S105 comprend en outre le contrôle du véhicule pour qu'il se déplace à la première vitesse préréglée lorsque l'un des essieux différentiels est ajusté en place.

3. Procédé de commande selon la revendication 1, **caractérisé en ce que** la machine d'état du châssis peut basculer entre déplacement rectiligne, rotatif et latéral.

4. Procédé de commande selon l'une quelconque des revendications 1 à 3, **caractérisé en ce que** l'étape S103 comprend :

   déterminer si chaque essieu différentiel est ajusté en place en déterminant si chaque essieu différentiel patine ou flotte ; ou
   déterminer si chaque essieu différentiel est ajusté en place en déterminant si la différence entre un angle actuel de chaque essieu différentiel et l'angle correspondant au deuxième état est supérieure à un premier seuil.

5. Procédé de commande selon l'une quelconque des revendications 1 à 3, **caractérisé en ce qu'**il comprend en outre :
   le réglage d'une marque de patinage du véhicule à 0 lorsque chaque essieu différentiel est ajusté en place ; et le réglage de la marque de patinage du véhicule à 1 lorsque l'un des essieux de différentiels n'est pas ajusté en place.

6. Procédé de commande selon l'une quelconque des revendications 1 à 3, **caractérisé en ce qu'**il comprend en outre :

   S106 : déterminer si la différence entre l'angle actuel de chaque essieu différentiel et un angle correspondant à un état actuel de la machine d'état du châssis est supérieure à un deuxième seuil lorsque la machine d'état du châssis du véhicule ne commute pas ; et
   S107 : commander le véhicule pour qu'il se déplace à la deuxième vitesse préréglée lorsque la différence est supérieure au deuxième seuil, et ajuster continuellement l'angle d'un essieu différentiel dont la différence est supérieure au deuxième seuil, jusqu'à ce que la différence soit inférieure au deuxième seuil, et commander le véhicule pour qu'il se déplace à une vitesse normale supérieure à la deuxième vitesse prédéfinie.

7. Procédé de commande selon l'une quelconque des revendications 1 à 3, **caractérisé en ce que** le véhicule comporte quatre paires d'essieux différentiels, le véhicule est un véhicule à guidage automatique, et la seconde vitesse préréglée est inférieure ou égale à 5 cm/s.

8. Procédé de commande selon l'une quelconque des revendications 1 à 3, **caractérisé en ce qu'**il comprend en outre la détermination d'une déviation latérale Vyerr et d'une déviation angulaire φerr du véhicule ; et la détermination d'une vitesse latérale Vyerr et d'une correction de déviation de vitesse angulaire wφerr selon la formule suivante :

$$V_{yerr} = -kv \cdot Py \cdot yerr - kv \cdot Iy \cdot yerr$$

$$w\varphi err = -kv \cdot P_\varphi \cdot \varphi err - kv \cdot I_\varphi \cdot \varphi\ err$$

$$kv = |V_x|$$

où Py, Iy sont respectivement un coefficient proportionnel et un coefficient intégral pour le contrôle de correction de déviation latérale respectivement, $P_\varphi$, $I_\varphi$ sont un coefficient proportionnel et un coefficient intégral pour le contrôle de correction de déviation angulaire, et $V_x$ est une vitesse de déplacement du véhicule ; et $k_v$ est compris entre 0,2 et 1,0.

9. Procédé de commande selon l'une quelconque des revendications 1 à 3, **caractérisé en ce qu'**il comprend en outre l'exécution d'un contrôle d'égalisation de puissance à l'intérieur et entre chaque essieu différentiel lorsque le véhicule se déplace en ligne droite.

**10.** Procédé de commande selon la revendication 9, **caractérisé en ce que** le contrôle d'égalisation de puissance est effectué à l'intérieur et entre chaque essieu différentiel de la manière suivante :

calculer les puissances de deux moteurs dans chaque essieu, calculer une première puissance moyenne et ajuster et contrôler les deux moteurs par commande PID en fonction d'un écart entre la puissance de chaque moteur et la puissance moyenne, de manière à effectuer le contrôle d'égalisation de puissance à l'intérieur de l'essieu ; et

calculer les puissances de chaque essieu, calculer une deuxième puissance moyenne des essieux, et ajuster et contrôler la pluralité des essieux par PID en fonction d'un écart entre la puissance de chaque essieu et la deuxième puissance moyenne, de manière à effectuer le contrôle de l'égalisation de puissance entre les essieux.

**11.** Procédé de commande selon l'une quelconque des revendications 1 à 3, **caractérisé en ce que** la machine d'état du châssis comprend un état rectiligne, un état de rotation, un état latéral et un état de courbe, dans lequel l'angle correspondant au second état est dans une direction parallèle à une tête du véhicule lorsque le second état est l'état rectiligne ou l'état courbe ; l'angle correspondant au second état est perpendiculaire à une ligne entre l'essieu et le centre de rotation lorsque le second état est l'état de rotation ; et l'angle correspondant au deuxième état est perpendiculaire à une direction de la tête du véhicule lorsque le second état est l'état latéral.

**12.** Véhicule à guidage automatique, **caractérisé en ce qu'**il comprend :

une pluralité de paires d'essieux différentiels ;

un contrôleur couplé à la pluralité de paires d'essieux différentiels et configuré pour être capable de mettre en oeuvre le procédé de commande selon l'une quelconque des revendications 1 à 11.

**13.** Véhicule à guidage automatique selon la revendication 12, **caractérisé en ce que** le véhicule à guidage automatique comporte quatre paires d'essieux différentiels, chaque paire d'essieux différentiels comprend deux roues, et le véhicule à guidage automatique comprend un moteur correspondant à chaque roue.

**14.** Véhicule à guidage automatique selon les revendications 12 ou 13, **caractérisé en ce qu'**il comprend en outre :

une pluralité de capteurs d'angle, chacun correspondant à l'une des paires d'essieux différentiels et détectant un angle des essieux différentiels ; les capteurs d'angle sont en communication avec le contrôleur pour transmettre l'angle ;

dans lequel le contrôleur est configuré pour : contrôler le véhicule afin de l'arrêter, puis ajuster les essieux différentiels lorsque la machine d'état du châssis passe du premier état au deuxième état.

**15.** Véhicule à guidage automatique selon la revendication 12 ou 13, **caractérisé en ce qu'**il comprend en outre une pluralité de capteurs permettant de détecter un patinage, chacun correspondant à l'une des paires d'essieux différentiels permettant de détecter si les essieux différentiels patinent, les capteurs permettant de détecter un patinage étant en communication avec le contrôleur.

**16.** Support de stockage lisible par ordinateur, comprenant des instructions informatiques exécutables qui y sont stockées, **caractérisé en ce que** les instructions informatiques exécutables mettent en oeuvre le procédé de commande selon l'une quelconque des revendications 1 à 11 lorsqu'elles sont exécutées par un processeur.

Fig. 1

<u>100</u>

```
┌─────────────────────────────────────┐
│               S101                   │
│  Determining whether a chassis state │
│  machine of the vehicle switches     │
│  from a first state to a second      │
│  state                               │
└─────────────────────────────────────┘
                   │
                   ▼
┌─────────────────────────────────────┐
│               S102                   │
│  adjusting angles of the plurality   │
│  of differential wheel sets to       │
│  angles corresponding to the second  │
│  state when the chassis state        │
│  machine switches                    │
└─────────────────────────────────────┘
                   │
                   ▼
```

S103
Determining whether each differential wheel set is adjusted in place upon a preset time

No

Yes

┌─────────────────────────────────────┐
│               S104                   │
│  Controlling the vehicle to travel   │
│  at a first preset velocity          │
└─────────────────────────────────────┘

┌─────────────────────────────────────┐
│               S105                   │
│  Controlling the vehicle to travel   │
│  at a second preset velocity, and    │
│  also continuously adjusting the one │
│  of the differential wheel set,      │
│  wherein the second preset velocity  │
│  is lower than the first preset      │
│  velocity                            │
└─────────────────────────────────────┘

Fig. 2

<u>200</u>

**S201**
staying in a stationary state after the vehicle completes a last movement

↓

**S202**
switching the motion states (from STRAIGHT to SIDESWAY)

↓

**S203**
adjusting angles of wheel sets to 90 degree

↓

**S204**
all the four wheel sets adjusted to 90 degree? — No →

Yes ↓

**S205**
controlling the vehicle to travel at a first preset velocity

**S206**
controlling the vehicle to travel at a lower second preset velocity while continuously adjusting the wheel set which is not in place

Fig. 3

Fig. 4

**EP 4 001 057 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3689709 A1